# EUROPEAN PATENT APPLICATION

(11) **EP 4 772 017 A1**
(43) Date of publication of application: **08.07.2026**
(21) Application number: 25227791.8
(22) Date of filing: 30.12.2025
(51) Int. Cl.: A01G 13/32, A01N 25/10, A01N 25/34, A01N 31/16, A01N 43/40, A01N 43/90, A01N 53/00, A01N 65/03, A01N 65/44, A01P 7/04, A01P 21/00

(54) **BIODEGRADABLE GEOTEXTILE STRUCTURE FOR SOIL BIOSTIMULATION**

(30) Priority: 30.12.2024 PT 2024119950
(71) Applicant: Oprimee - Innovation Design Engineering Solutions, Lda, 3405-155 Oliveira do Hospital (PT)
(72) Inventor: DOS SANTOS ALMEIDA NUNES, JOÃO MIGUEL, 3405-155 OLIVEIRA DO HOSPITAL (PT)
(74) Representative: Patentree

(57) **Abstract**

The present disclosure relates to a biodegradable geotextile structure for soil biostimulation comprising a woven fabric structure of hydrophilic filament yarns of a cellulose fiber selected from the list consisting of: alpha cellulose, beta cellulose, gamma cellulose or mixtures thereof; at least a plant-based biopesticide selected from the list consisting of: Nicotine, Rotenone, Pyrethrins I, Pyrethrins II, Eugenol, Citronella oil, and mixtures thereof; at least a microalgae selected from the list consisting of: Chlorella spp., Scenedesmus spp, Dunaliella spp, Spirulina spp., and mixtures thereof. Furthermore, the present disclosure relates to a method to obtain said biodegradable geotextile structure.

## Description

### TECHNICAL FIELD

The present disclosure pertains to a biodegradable geotextile structure for agricultural and environmental applications. More specifically, the present disclosure relates to a biodegradable geotextile structure comprising cellulose-based fibers and bioactive components for soil biostimulation and pest management.

Additionally, it features water retention and controlled release systems, to collectively enhance root development, water management, pest control, and plant growth.

### BACKGROUND

Agriculture currently faces several challenges related to environmental sustainability, including soil erosion, degradation of water resources, and dependence on synthetic pesticides that compromise the health of agricultural ecosystems. The need for more sustainable practices is becoming increasingly urgent due to the negative impact of these conventional techniques on the environment and global food security.

Conventional geotextile blankets are widely used in agricultural and landscaping applications to control soil erosion and suppress the growth of invasive plants. These blankets are predominantly made from synthetic polymers derived from non-renewable resources. While effective in their intended functions, the use of these synthetic materials poses significant environmental challenges. One major issue is the contribution to environmental pollution, as the extensive use of synthetic polymers leads to the accumulation of plastic waste in agricultural ecosystems. This plastic waste can persist in the environment for extended periods, disrupting ecosystems and contributing to broader pollution problems.

In addition to the environmental impact, conventional geotextile blankets also have limitations in their efficiency in water management. Although they aid in water conservation by reducing evaporation and minimizing water loss through runoff, these blankets do not provide mechanisms for the sustainable retention and controlled release of water. This lack of functionality can lead to suboptimal growing conditions, particularly in regions where water availability is a critical concern.

Additionally, the intensive use of chemical herbicides for controlling invasive plants poses significant risks not only to human health but also to biodiversity, necessitating more sustainable and environmentally responsible alternatives. Conventional methods for controlling invasive plants often rely on chemical herbicides, which can have adverse effects on human health and the environment. Natural alternatives, such as the use of biopesticides derived from plant extracts like garlic and onion, have been explored to reduce the dependence on synthetic chemical products.

Given these limitations, there is a pressing need for innovative geotextile solutions that not only control soil erosion and suppress invasive plant growth but also minimize environmental impact and enhance water use efficiency. Developing materials that are environmentally sustainable and capable of improving water retention and release in a controlled manner would represent a significant advancement in agricultural and environmental management practices.

In recent years, biodegradable geotextile mats made from renewable biomass such as cellulose, corn starch, and natural fibers have emerged. These materials are designed to naturally decompose in the environment, thereby reducing the environmental impact compared to synthetic polymers. Biodegradable geotextile mats offer a more sustainable alternative for agricultural applications, providing erosion control and suppression of invasive plants without leaving persistent plastic residues in the soil.

Biodegradable geotextile mats face however several challenges that need to be addressed to ensure their effectiveness and widespread adoption in agricultural practice. One major challenge is ensuring durability and mechanical strength; these mats need to be sufficiently robust to withstand adverse environmental conditions and handling during installation. Maintaining their physical properties over time is crucial for effective soil and crop protection. Another challenge is achieving a controlled biodegradation rate. Finding the right balance between gradual biodegradation and sufficient durability is essential. Mats that degrade too quickly may not provide adequate protection for long enough, while those that degrade too slowly may not offer the expected environmental benefits.

Additionally, compatibility with different soil types and crops is vital. Biodegradable geotextile mats must be designed to integrate harmoniously with various soil types and climatic conditions without compromising crop growth or negatively impacting soil microbiology. The efficiency of these mats in erosion control and weed suppression must also be comparable to conventional geotextile mats. This means ensuring they provide an effective barrier against soil and water loss, as well as controlling the establishment of unwanted plants.

Cost and availability present further challenges. The large-scale production of biodegradable geotextile mats can be more complex and costly than the manufacturing of synthetic materials. Economic accessibility and material availability are critical factors for their adoption in the agricultural market. Finally, compliance with environmental regulations and sustainability standards is essential for the acceptance and widespread use of biodegradable mats. This includes meeting biodegradation, composting, and environmental impact standards associated with the product's lifecycle. Addressing these challenges is crucial for the development and implementation of effective, sustainable alternatives to conventional geotextile mats.

U.S. Patent No. 6,401,390 pertains to a mulch designed with preprogrammed biodegradability, consisting of at least two distinct layers of biodegradable polymer applied to a sheet of cellulosic material, one of which is a polylactide layer. This mulch is effective for weed control in agriculture, horticulture, and forestry industries. During the biodegradation process, some biodegradable materials may however release byproducts, such as organic acids, in large quantities. These byproducts can alter soil pH or negatively impact soil microbiology. Moreover, the decomposition of organic materials, including biodegradable polymers, can lead to the release of carbon dioxide (CO2) and methane (CH4). In some cases, the biodegradation of these polymers can even result in the temporary formation of microplastics, which can adversely affect soil fauna.

U.S. Patent No. 5,207,020 relates to a durable erosion control blanket that features a novel synthetic fiber filler. It addresses the need for a highly resilient erosion control solution by utilizing a post-consumer, crimped polyester fiber filler material. However, handling and installing synthetic fiberbased materials might pose health risks to workers due to potential exposure to microplastics or other synthetic particles.

U.S. Patent No. 9,693,509 discloses a biodegradable mulch produced through multi-layer extrusion of a mixture of two compostable biodegradable polymers. This mulch self-degrades rapidly, transforming into compostable material that enriches the soil and eliminates the need for the collection and cleaning tasks associated with conventional mulches. However, if the mulch does not fully degrade under certain conditions, it could leave behind residues that may not be beneficial to the soil or plants. Moreover, while the mulch becomes compostable material, the specific nutrient composition of the degraded mulch might not always align with the nutritional needs of all types of soil or crops, potentially requiring additional soil amendments.

U.S. Patent No. 6,293,045 pertains to a mulch mat comprising an air and water-permeable, lightimpermeable, open celled, composite of granular material and biodegradable fibers in a binder matrix prepared from a foam precursor. Disclosed biodegradable fibers include cellulosic fibers, such as shredded wood, straw, shredded paper, wood pulp, cotton fiber, shredded corn stalks and moss; protein fibers such as hair and gelatin; and synthetic polymer such as vinyl polymer fibers and polyamide fibers. However, the use of protein fibers like hair and gelatin might pose allergen risks to some users, limiting its applicability in sensitive environments. Although synthetic polymer fibers are biodegradable, their environmental impact during production and the potential for incomplete degradation might still be concerns.

U.S. Patent No. 5,421,123 discloses a vegetation mat that that comprises a layer of vegetation material selected from the group consisting of soil improvement material, fertilizer, organic material, vegetation seeds, and combinations thereof, a front and back sheet, which are capable of being at least partly decomposed and are coupled together to wrap the vegetation material. It is however important to note that the combination of soil improvement material, fertilizer, organic material, and vegetation seeds must be carefully balanced to meet the specific needs of different plants and soil conditions, which can be difficult to standardize. In certain conditions, the sheets may even not decompose entirely, leaving remnants that could interfere with plant growth or soil health. While the materials are intended to decompose, ensuring that they break down completely and do not leave harmful residues in the soil is a potential challenge.

U.S. Patent No. 6,195,935 discloses to a biodegradable mat for protect and enhance plant growth. The mat is in circular, sinusoidal or linear form and comprises a plant food, soil fertilizer, soil enricher, soil supplement, insecticide, fungicide, herbicide and/or animal repellant. The mat is placed on the ground adjacent and around the stem of a plant. It is then covered with a layer of soil and/or mulch and moistened to release the active ingredients. However, the use of insecticides, fungicides, herbicides, and animal repellents might have unintended negative effects on non-target organisms, soil microbiology, and overall ecosystem health.

Given this scenario, there is an urgent need to develop and implement innovative technologies that not only address the environmental challenges faced by modern agriculture but also promote holistic, sustainable, and resource-efficient agricultural practices.

These facts are disclosed in order to illustrate the technical problem addressed by the present disclosure.

### GENERAL DESCRIPTION

The present disclosure relates to a biodegradable geotextile structure for soil biostimulation comprising:
a woven fabric structure of hydrophilic filament yarns of a cellulose fiber selected from the list consisting of: alpha cellulose, beta cellulose, gamma cellulose or mixtures thereof;
at least a plant-based biopesticide selected from the list consisting of: Nicotine, Rotenone, Pyrethrins I, Pyrethrins II, Eugenol, Citronella oil, and mixtures thereof;
at least a microalgae selected from the list consisting of: Chlorella spp., Scenedesmus spp, Dunaliella spp, Spirulina spp., or mixtures thereof.

In a preferred embodiment for better results, the plant-based biopesticide(s) and the microalgae are trapped in the apertures of the woven mesh of the woven fabric structure.

The solution of the present disclosure not merely to provide a biodegradable mat containing bioactive agents, but to provide a geotextile structure capable of simultaneously ensuring sustained delivery of plant-based biopesticides, stabilization of soil moisture and promotion of rhizosphere biological activity during the critical establishment phase of plants, while fully degrading thereafter without persistent residues

Surprisingly, the specific characteristics of the woven fabric structure provide controlled, sustained release of the plant-based biopesticide(s) and the microalgae, enhancing their efficacy in soil biostimulation and pest management over extended periods.

A key distinguishing aspect lies in the temporal coupling between water retention, bioactive release and biodegradation, whereby the geotextile remains mechanically functional and biologically active during early plant development and progressively loses integrity only after this phase.

The biodegradable geotextile structure of the present disclosure provides several advantages:
- Enhanced Biodegradability: The structure completely degrades into the soil without leaving harmful residues.
- Synergistic Functionality: Combines pest management and soil enhancement in a single, integrated solution.
- Improved Durability: Engineered to withstand environmental stress while maintaining performance.
- Sustainability: Reduces reliance on synthetic chemicals and promotes eco-friendly agricultural practices.

The biodegradable geotextile structure of the present disclosure achieves enhanced durability and controlled biodegradation by optimizing the characteristics of the woven fabric structure. This innovation ensures that the geotextile retain sufficient mechanical strength to withstand environmental stresses and handling during installation while degrading gradually under field conditions. The integration of bioactive agents, such as plant-based biopesticides and microalgae, provides additional functional benefits, including pest control and soil enrichment. The controlled release of these agents and the geotextile's balanced degradation rate ensure prolonged effectiveness, addressing the dual challenges of durability and environmental sustainability in a single, integrated solution.

This biodegradable geotextile structure is also intended for soil biostimulation, utilizing natural biopesticides to control pests in a safe, environmentally friendly manner.

Additionally, the biodegradable geotextile is characterized by its water retention system that releases moisture in a controlled way, supporting root development and promoting plant health.

The microalgae integrated into the biodegradable geotextile composition stimulate mycorrhization, enhancing soil structure, increasing nutrient absorption, and boosting plant growth.

This innovation efficiently combines biodegradability, pest control, and sustainable water management, offering an environmentally friendly solution for agricultural and gardening practices.

The present disclosure relates to a biodegradable geotextile structure intended for soil biostimulation, combining erosion-control functionality with biological and chemical soil treatment. The structure integrates hydrophilic cellulose-based filament yarns with plant-based biopesticides and microalgae, physically retained within the apertures of a woven textile architecture. The geotextile is configured to provide high water absorption capacity, sustained release of biopesticide agents over an extended period, and progressive biodegradation under soil exposure conditions. The disclosed geotextile structure provides a multifunctional soil treatment system that unifies mechanical soil stabilisation, biological soil enhancement, and environmentally compatible pest control within a single biodegradable textile matrix.

An aspect of the present disclosure relates to a biodegradable geotextile structure for soil biostimulation comprising:
a woven textile structure formed from hydrophilic filament yarns of a cellulose fiber, wherein the cellulose is selected from the list consisting of: alpha cellulose, beta cellulose, gamma cellulose and mixtures thereof;
at least one plant-based biopesticide selected from the list consisting of: nicotine, rotenone, pyrethrins I, pyrethrins II, eugenol, citronella oil, and mixtures thereof;
at least one microalgae selected from the list consisting of: chlorella spp., scenedesmus spp, dunaliella spp, spirulina spp., and mixtures thereof,
wherein the woven textile structure defines mesh apertures having a mesh opening of from 0.1 mm to 50 mm; wherein the at least one plant-based biopesticide and the at least one microalgae are physically entrapped and/or adsorbed within the mesh apertures and on the filament yarns of the woven textile structure,
and wherein the geotextile structure comprises:
   a water absorption capacity from 200 % to 700 % by mass, relative to dry mass;
   a sustained release of the plant-based biopesticide into soil over a period of 15 to 120 days, and progressive biodegradation resulting in a mass loss of at least 50% within 3 to 12 months under soil exposure conditions, thus without formation of persistent residues.

In the present disclosure, biodegradable refers to the ability of a material to undergo decomposition by biological activity in soil, resulting in a progressive reduction in mass and conversion into naturally occurring substances without the formation of persistent or harmful residues.

Geotextile structure refers to a permeable textile material intended for contact with soil and configured to perform functions such as erosion control, soil stabilisation, water retention, filtration, and soil conditioning.

Woven textile structure refers to a fabric formed by interlacing filament yarns in at least two directions so as to define a mechanically stable mesh having apertures between intersecting yarns.

Cellulose-based filament yarns refer to yarns comprising cellulose as the principal polymeric component, wherein the cellulose comprises alpha cellulose, beta cellulose, gamma cellulose, or mixtures thereof.

Hydrophilic refers to the ability of a material to absorb and retain water, thereby increasing moisture availability in soil-contact applications.

Mesh apertures refer to the open spaces formed between intersecting filament yarns of the woven textile structure, the apertures allowing passage of water, air, and soil particles.

Plant-based biopesticide refers to a biologically active compound derived from plant sources and effective in controlling or suppressing soil-borne pests, including compounds such as nicotine, rotenone, pyrethrins, eugenol, and citronella oil.

Microalgae refer to unicellular or simple multicellular photosynthetic microorganisms, including species of Chlorella, Scenedesmus, Dunaliella, and Spirulina, present in viable or non-viable form.

Physical retention refers to the confinement of plant-based biopesticides and microalgae within the geotextile structure by mechanical entrapment within mesh apertures, adsorption onto filament yarn surfaces, or a combination thereof, without covalent bonding.

Sustained release refers to the gradual liberation of a plant-based biopesticide from the geotextile structure into the surrounding soil over an extended period following deployment.

Water absorption capacity refers to the amount of water absorbed by the geotextile structure, expressed as a percentage of the dry mass of the structure.

Progressive biodegradation refers to the gradual reduction in mass and structural integrity of the geotextile structure over time under soil exposure conditions.

Grammage refers to the mass per unit area of the geotextile structure, expressed in grams per square meter (g/m²). Areal loading refers to the amount of plant-based biopesticide and/or microalgae present per unit area of the geotextile structure, expressed in grams per square metre (g/m²).

Mass ratio refers to the ratio between the mass of microalgae and the mass of plant-based biopesticide present in the geotextile structure.

Soil biostimulation refers to the enhancement of biological activity in soil through the combined provision of moisture, nutrients, microorganisms, and biologically active compounds.

In an embodiment for better results, the grammage of the geotextile ranges from 50 to 1500 g/m².

In an embodiment for better results, the thickness of the geotextile ranges from 0.1 µm to 10 mm.

Another aspect of the present disclosure relates to a geotextile mat, sheet or roll comprising the biodegradable geotextile structure herein described.

Another aspect of the present disclosure relates to a method for producing a biodegradable geotextile structure comprising the steps of:
weaving a fabric structure of hydrophilic filament yarns of a cellulose fibers selected from the list consisting of alpha cellulose, beta cellulose, gamma cellulose, or mixtures thereof;
treating the woven fabric structure with a solution or suspension comprising at least a plant-based biopesticide and at least a microalgae;
drying the treated woven fabric structure to trap the at least a plant-based biopesticide and the at least a microalgae within the mesh apertures of the woven fabric structure.

The unexpected technical effect achieved by the disclosed technology lies in the synergistic interaction between the hydrophilic, biodegradable cellulose matrix, the sustained release of plant-based biopesticides and the biostimulating action of microalgae. This synergy results in agronomic performance exceeding that obtainable by any of the individual components alone, combining pest management, soil bioactivation, water regulation and programmed biodegradation within a single integrated geotextile structure.

### BRIEF DESCRIPTION OF THE DRAWINGS

The following figures provide preferred embodiments for illustrating the disclosure and should not be seen as limiting the scope of invention.

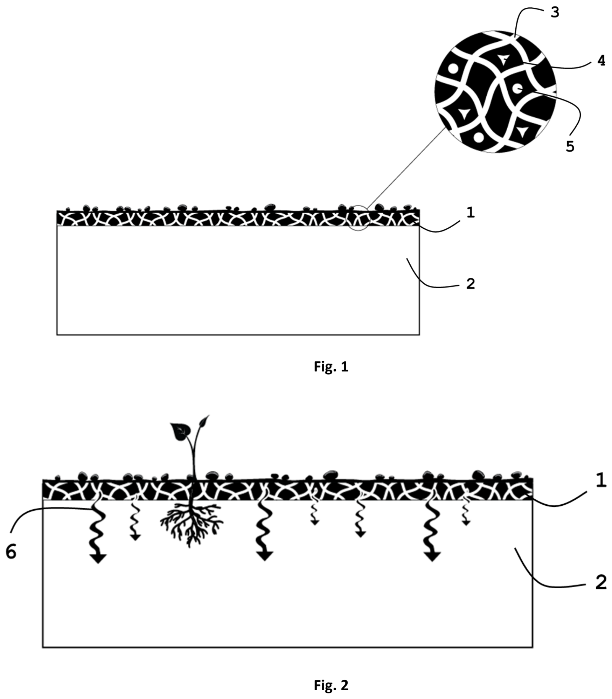

**Figure 1****:** General view of the biodegradable geotextile structure (1) used for biostimulation, that should be placed at soil (2) level. The figure illustrates the composition of the biodegradable geotextile structure (1), made from cellulose fibers (3), natural biopesticides (4), and microalgae (5).
**Figure 2****:** illustrates that the structure of the biodegradable geotextile structure (1) is porous, allowing the geotextile structure to absorb and release water efficiently (6), and is flexible to enable integration with the soil (2).

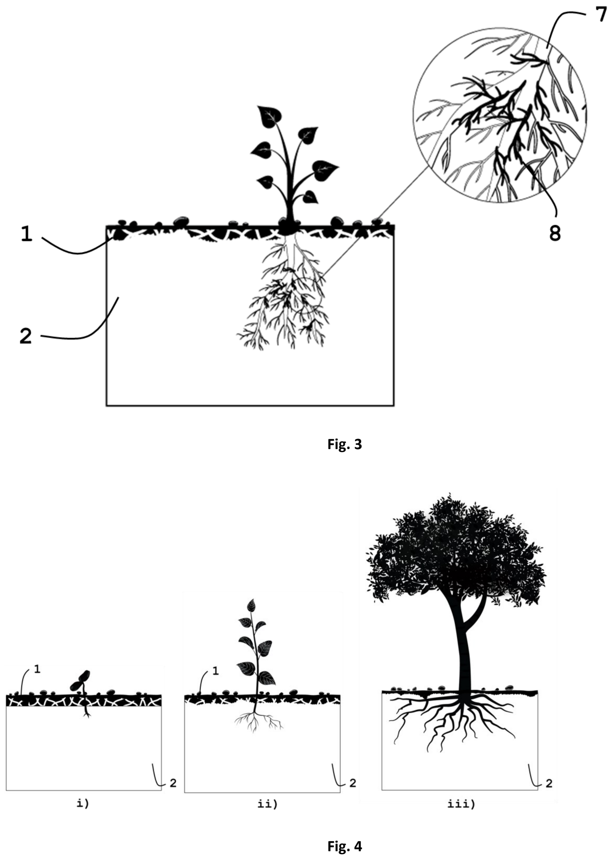

**Figure 3****:** illustrates how, as the biodegradable geotextile structure (1) degrades, there is interaction between the microalgae (3), present in the geotextile structure , the soil (2), and the plant roots (7). The microalgae act as biostimulants, promoting mycorrhization (8).
**Figure 4****:** Placement of the biodegradable geotextile structure (1) at the time of planting (i). Due to its properties, the geotextile structure degrades over time (ii), stimulating the growth of the plant and eventually degrading completely (iii). However, the time it takes for complete degradation ensures that the plant has enough time to develop its root system, allowing it to grow healthily.

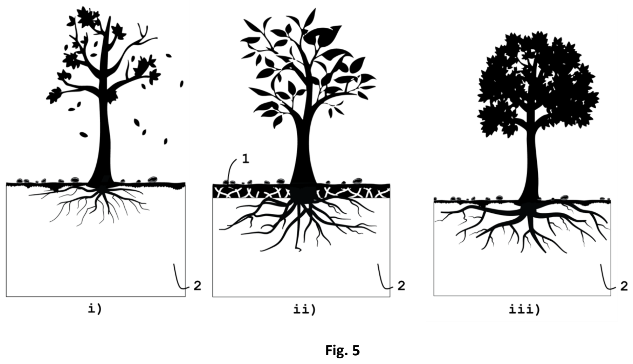

**Figure 5****:** Process similar to the one previously mentioned, but in another possible application of this invention, which would be to apply the biodegradable geotextile structure (1) on soil (2) with existing plants (i). As mentioned earlier, due to its properties, the geotextile structure degrades over time (ii), stimulating the growth of the plant and eventually degrading completely (iii).

### DETAILED DESCRIPTION

The present disclosure relates to a biodegradable geotextile structure for soil biostimulation comprising a woven fabric structure of hydrophilic filament yarns of a cellulose fiber selected from the list consisting of: alpha cellulose, beta cellulose, gamma cellulose or mixtures thereof; at least a plant-based biopesticide selected from the list consisting of: Nicotine, Rotenone, Pyrethrins I, Pyrethrins II, Eugenol, Citronella oil, and mixtures thereof; at least a microalgae selected from the list consisting of: Chlorella spp., Scenedesmus spp, Dunaliella spp, Spirulina spp., and mixtures thereof.

The biodegradable geotextile structure of the present disclosure is designed to enhance soil stabilization, erosion control, drainage, and filtration. It incorporates several features aimed at improving root development, water management, pest control, and plant growth. The key components include a cellulose-based structure for increased biodegradability and built-in biopesticides derived from natural plant extracts. Additionally, the biodegradable geotextile structure integrates a water retention and controlled release system, as well as microalgae that act as bio-stimulants, promoting mycorrhization and improving soil health. This multifunctional biodegradable geotextile structure offers a sustainable, efficient, and eco-friendly solution, addressing the limitations of traditional geotextiles and biodegradable mulches, while promoting environmental sustainability and soil health.

The general concept of the biodegradable geotextile structure is represented in **Fig 1**, which shows a soil-level biodegradable geotextile structure **(1)** comprising a structure made of cellulose fibers **(3),** natural biopesticides **(4),** and microalgae **(5),** designed for soil stabilization, erosion control, drainage, and filtration.

The inclusion of cellulose fibers **(3)** in the composition of the biodegradable geotextile structure **(1)** gives it a hydrophilic, porous structure that allows for efficient water absorption and controlled, gradual release **(6).** This enables the biodegradable geotextile structure **(1)** to manage water retention effectively, promoting water conservation and creating optimal conditions for plant growth, which is represented in **Fig. 2****.** The water retention mechanism helps to retain moisture during rainfall, gradually releasing it to ensure the soil stays moist, supporting root development, especially in regions prone to water scarcity. Additionally, the biodegradable geotextile structure is flexible, allowing it to integrate seamlessly with the soil. The cellulose fibers **(3)** are designed to degrade in a controlled manner, ensuring that the geotextile structure continues to provide benefits over time without leaving harmful residues.

The biodegradable geotextile structure **(1)** is also characterized by being infused with natural biopesticides **(4)** derived from plant extracts, ensuring sustainable pest control without harming the environment. The biopesticides are active substances released in a controlled manner over time, effectively combating pests without negatively impacting the local biodiversity.

The biodegradable geotextile structure **(1)** also incorporates microalgae **(5),** which interact with both the soil **(2)** and plant roots **(7),** represented in **Fig. 3****.** These microalgae **(5)** act as bio-stimulants, promoting mycorrhization **(8),** which results in enhanced nutrient exchange between the roots and soil **(2).** This improves soil health, fosters plant growth, and increases resistance to diseases and environmental stresses.

The manufacturing process of the biodegradable geotextile structure **(1)** involves the incorporation of cellulose fibers **(3),** natural biopesticides **(4)** and microalgae **(5).** This process is carried out sustainably, utilizing renewable materials and production techniques that minimize environmental impact.

The biodegradable geotextile structure **(1)** is designed with a controlled degradation rate, ensuring it remains functional for a sufficient period to control erosion, promote plant growth, and manage water, before degrading completely without leaving harmful residues in the soil.

This biodegradable geotextile structure **(1)** can be applied to various soil types and crops, both in agricultural and landscaping settings, providing effective solutions for erosion control, water management, and soil health improvement. It can be applied during planting **Fig. 4** or to soils with existing vegetation **Fig. 5****,** contributing to environmental sustainability.

In one embodiment, the biodegradable geotextile structure is characterized in that it comprises a cellulose-based structure, specifically engineered to improve soil stabilization, erosion control, drainage, and filtration.

In another embodiment, the biodegradable geotextile structure incorporates biopesticides derived from natural plant extracts, with the purpose of controlling pests in an environmentally sustainable manner.

In yet another embodiment, the biodegradable geotextile structure includes a system for water retention and controlled release, enhancing moisture availability for plant growth.

In yet another embodiment, the biodegradable geotextile structure contains microalgae, which act as bio-stimulants, promoting mycorrhization and improving soil health.

A The biodegradable geotextile structure provides soil stabilization, erosion control, drainage, and filtration

It provides water retention and controlled release due to its cellulosic fibers, designed to capture water during rainfall and gradually release it, ensuring efficient water use and promoting plant growth.

The pant-based biopesticides of the geotextile structure are released in a controlled manner over time, providing long-term protection against pests while maintaining environmental sustainability.

The microalgae of the geotextile structure act as bio-stimulants, promoting mycorrhization and enhancing soil health by improving nutrient exchange between plant roots and soil.

The biodegradation rate of the geotextile structure is controlled to ensure that the blanket remains functional for an adequate time to stabilize the soil, control erosion, and support plant growth before it fully decomposes without leaving harmful residues.

The biodegradable geotextile structure of the present disclosure is suitable for use in various soil types and agricultural or landscaping settings, providing effective solutions for erosion control, water management, and soil health improvement while promoting environmental sustainability.

The biodegradable geotextile structure of the present disclosure is also suitable for use in post-fire soil rehabilitation, ecosystem restoration, and sustainable agricultural practices, where it provides support for soil stabilization, water retention, and enhanced plant establishment.

In an embodiment, the cellulose is selected from a group consisting of: wood pulp, agricultural residues, or other sustainable natural fibers to ensure the mat's biodegradability and environmental compatibility.

The biodegradable geotextile structure of the present disclosure exhibits a high degree of flexibility, allowing for easy integration with the soil surface and enhancing root establishment during the early growth phases of plants.

In an embodiment, the biodegradable geotextile structure described herein functions as an active, multifunctional system rather than a passive covering material. Its performance derives from the controlled interaction between the cellulosic woven matrix, the incorporated plant-based biopesticides and the microalgal biomass, resulting in sustained bioactivity, programmed biodegradation, improved soil conditions and enhanced plant development.

In an embodiment, the release of the plant-based biopesticides incorporated in the disclosed geotextile structure, including nicotine, rotenone, pyrethrins, eugenol and citronella oil, follows a combined diffusion-desorption mechanism governed by the intrinsic physicochemical properties of the compounds and by the characteristics of the woven cellulosic matrix. The dominant factors influencing release kinetics include the hydrophobicity of the active compounds, the degree of physical retention within the mesh apertures, soil moisture conditions and degradation processes occurring at the soil-air interface, such as hydrolysis and photodegradation.

In an embodiment, under typical agricultural conditions, the release profile exhibits a quasi-Fickian behaviour with sustained delivery over time. An initial phase occurring during the first days after installation is characterized by a limited surface release associated with direct contact with irrigation water or rainfall, generally not exceedingly approximately twenty to thirty percent of the available active load. This is followed by a diffusion-controlled phase, typically extending from several days to several weeks, during which release is regulated by diffusion through the swollen cellulose fibres and migration from within the mesh apertures. A residual release phase then occurs, coupled to the progressive biodegradation of the cellulosic matrix, ensuring prolonged availability of the biopesticides.

In an embodiment, this release behaviour avoids the occurrence of high initial concentration peaks commonly associated with liquid or spray applications, thereby reducing ecotoxicological risks while maintaining prolonged efficacy against target organisms. Once released into the soil, the biopesticides undergo degradation through pathways consistent with their known environmental behaviour. Nicotine typically degrades through microbial oxidation, rotenone through combined photodegradation and microbial processes, pyrethrins through photolysis and hydrolysis, eugenol through aerobic biodegradation and citronella oil through volatilisation and microbial degradation. The gradual release mechanism ensures that effective concentrations are maintained over time while remaining below levels harmful to non-target organisms.

In an embodiment, the woven structure formed from alpha, beta and gamma cellulose undergoes controlled enzymatic biodegradation mediated by cellulolytic microorganisms naturally present in the soil. The degradation process proceeds through enzymatic hydrolysis of the cellulose chains into oligomeric sugars, which are subsequently metabolized into microbial biomass, carbon dioxide and soil organic matter.

In temperate agricultural environments, representative observations indicate a progressive mass loss over time, with partial degradation occurring during the first months after application and near-complete degradation within a period that can extend from several months to approximately one to two years, depending on the grammage, mesh size and environmental conditions. By selecting appropriate combinations of grammage and mesh aperture size, the functional lifetime of the geotextile can be adapted to the specific crop cycle, ensuring mechanical integrity during the critical establishment phase while enabling complete assimilation into the soil thereafter, without leaving persistent residues.

In an embodiment, the microalgae incorporated into the geotextile structure, such as species of the genera Chlorella, Scenedesmus, Dunaliella and Spirulina, enter a metabolically latent state during the drying process. The cellulosic matrix provides physical protection against mechanical stress and excessive dehydration, enabling a significant fraction of the microalgal cells to survive drying and regain metabolic activity upon rehydration.

After exposure to soil moisture following installation, a proportion of the algal cells resumes metabolic activity within one to several days. Representative observations indicate post-rehydration viability rates that depend on the algal species and drying conditions. Even in cases where a fraction of the biomass does not regain viability, the remaining algal material contributes indirectly to soil biostimulation by releasing amino acids, polysaccharides, micronutrients and other organic compounds that support microbial activity and soil health.

The biodegradable geotextile structure exerts simultaneous physical, biological and chemical effects on the soil. Physically, the woven cellulosic matrix reduces surface erosion, improves aggregate stability and enhances superficial porosity. Biologically, the gradual input of organic carbon and bioactive compounds stimulates beneficial soil microbiota and increases overall enzymatic activity. Chemically, the slow release of organic matter avoids abrupt changes in soil pH and contributes to improved nutrient retention while reducing leaching losses.

Due to the hydrophilic nature of cellulose, the geotextile structure exhibits a high capacity for water absorption and retention. Upon wetting, the fibres absorb and retain water within their capillary network, functioning as a temporary reservoir that gradually releases moisture back into the soil. This mechanism reduces evaporation from the soil surface and stabilises moisture levels in the root zone, particularly in sandy or degraded soils prone to water stress. Repeated wetting and drying cycles allow the geotextile to recharge its water-holding capacity under natural rainfall or irrigation conditions.

The combined effects of controlled biopesticide release, algal bioactivity and improved soil moisture result in enhanced plant establishment and growth. Representative observations indicate increased germination rates, improved root elongation and greater above-ground biomass compared to soils without geotextile coverage or with conventional geotextiles. Plants grown in association with the described structure exhibit improved tolerance to water stress and biotic pressures, attributed to the stabilized soil microclimate and sustained bioactive input.

In contrast to synthetic geotextiles, which do not biodegrade and may generate microplastic residues, and to conventional biodegradable mats that primarily serve physical functions, the described geotextile structure integrates controlled release of bioactive compounds, active biostimulation and water management within a single material. This integrated functionality results in superior agronomic performance and environmental compatibility, distinguishing the invention from solutions that provide only erosion control or soil coverage.

The promotion of mycorrhizal associations observed in soils treated with the described geotextile structure is attributed to complementary mechanisms. Microalgae release or make available bioactive molecules that act as biochemical signals and substrates in the rhizosphere, enhancing microbial activity and root exudation. The algal biomass contributes organic nutrients and naturally chelated micronutrients, improving early nutrient availability and creating favorable conditions for fungal colonization. In addition, the stabilized moisture environment provided by the water-retentive cellulosic matrix supports fungal hyphal growth and survival. The reduced biotic stress resulting from sustained biopesticide release further allows plants to allocate resources to root development and symbiotic interactions, thereby facilitating mycorrhization.

The biodegradable geotextile structure is environmentally advantageous due to its complete biodegradation without formation of persistent residues, its ability to reduce reliance on synthetic pesticides and its contribution to soil organic matter and biological activity. The controlled release mechanism mitigates leaching and runoff losses, reducing potential contamination of surrounding ecosystems.

From a practical standpoint, the structure can be deployed in the field as rolls, sheets or mats, compatible with manual or mechanized installation. Its mechanical integrity is sufficient to withstand handling and environmental exposure during the crop establishment phase, after which controlled degradation occurs. The release of bioactive compounds and water is naturally modulated by soil moisture and temperature, making the system inherently responsive to real agricultural conditions.

The present disclosure relates to a biodegradable geotextile structure configured as an active system for soil bioestimulation, water management and plant protection. Unlike conventional geotextiles that perform exclusively mechanical or physical functions, the structure described herein integrates, within a single woven cellulosic matrix, plant-based biopesticides and microalgal biomass, which are physically retained within the apertures of the woven mesh and released in a controlled and sustained manner during use.

In the context of the present disclosure, 'physically retained' or 'physically trapped' refers to retention achieved by the geometric confinement of bioactive particles or droplets within the apertures and capillary network of the woven cellulosic structure, optionally assisted by adsorption to hydrophilic fibre surfaces, without chemical bonding or encapsulation.

In an embodiment, the geotextile structure comprises a woven textile formed from hydrophilic filament yarns of cellulosic fibres selected from alpha cellulose, beta cellulose, gamma cellulose or mixtures thereof. The woven configuration provides mechanical integrity, flexibility and intimate contact with the soil surface while simultaneously defining a network of apertures capable of physically retaining bioactive components.

In an embodiment, the size of the mesh apertures may vary depending on the intended application and desired functional lifetime. In an embodiment, the apertures have dimensions ranging from 0.1 mm to 50 mm, preferably from 0.5 mm to 10 mm. This configuration enables effective physical entrapment of biopesticides and microalgae while allowing water penetration, gas exchange and root development.

In an embodiment, the grammage of the geotextile may range from 50 g/m² to 1500 g/m², preferably from 200 g/m² to 900 g/m². Lower grammages favour faster biodegradation and shorter functional lifetimes, while higher grammages provide increased mechanical durability and extended performance. In an embodiment, the thickness of the structure may range from 0.1 µm to 10 mm, preferably from 0.5 mm to 5 mm, contributing to water retention capacity and resistance to handling stresses during installation.

In an embodiment, at least one plant-based biopesticide and at least one microalga is incorporated into the woven structure by treatment with a solution or suspension containing the respective bioactive components, followed by controlled drying. The drying step causes the biopesticides and microalgal biomass to become physically entrapped within the apertures and capillary structures of the woven cellulosic matrix, without the need for synthetic binders or encapsulating polymers.

In an embodiment, the plant-based biopesticides are selected from nicotine, rotenone, pyrethrins I, pyrethrins II, eugenol, citronella oil or mixtures thereof. The total amount of biopesticides incorporated into the structure may range from 0.5 g/m² to 15 g/m², preferably from 1 g/m² to 8 g/m², depending on the target organisms, crop type and environmental conditions. Individual compounds may be present within these ranges, for example pyrethrins in amounts from 0.1 g/m² to 3.0 g/m², preferably from 0.3 g/m² to 2.0 g/m², and eugenol and/or citronella oil in individual amounts from 0.1 g/m² to 5.0 g/m².

In an embodiment, the microalgal component comprises at least one species selected from Chlorella spp., Scenedesmus spp., Dunaliella spp., Spirulina spp. or mixtures thereof. The microalgae are incorporated as biomass, expressed on a dry weight basis, in amounts ranging from 0.5 g/m² to 25 g/m², preferably from 1 g/m² to 10 g/m².

In an embodiment, after treatment with the bioactive-containing suspension, the woven structure is subjected to controlled drying conditions selected to preserve the functional integrity of both the biopesticides and the microalgae. Drying is preferably performed at a maximum temperature equal to or lower than 60 °C, more preferably equal to or lower than 45 °C. Under these conditions, volatilization and thermal degradation of sensitive biopesticides are minimized, and the microalgae enter a metabolically latent state without irreversible loss of functionality.

In an embodiment, the residual moisture content of the dried structure may range from 5 % to 15 % (w/w), preferably from 8 % to 12 %(w/w), which ensures storage stability while allowing rapid rehydration and activation upon contact with soil moisture.

In an embodiment and when deployed on the soil, the geotextile structure provides sustained release of the plant-based biopesticides and gradual availability of the microalgal biomass. The release mechanism is governed by diffusion through the swollen cellulosic fibres, desorption from the mesh apertures and, at later stages, progressive biodegradation of the cellulose matrix.

In an embodiment, the release of the biopesticides typically occurs over a period ranging from 15 to 120 days, preferably from 30 to 90 days, depending on compound properties, soil moisture and temperature. This sustained release avoids the occurrence of high initial concentration peaks and reduces the frequency of reapplication compared with conventional treatments.

In an embodiment, due to the physical entrapment of the bioactive components within the woven structure and the capillary behavior of the hydrophilic cellulose, initial losses by lixiviation after the first irrigation or precipitation event are limited. In an embodiment, initial lixiviation losses are below 40 %, preferably below 30 %, contributing to reduced environmental impact and improved efficacy.

In an embodiment, the hydrophilic nature of the cellulosic fibres confers a high water absorption and retention capacity to the geotextile structure. The structure is capable of absorbing water in amounts ranging from 200 % to 700 % of its dry mass, preferably from 300 % to 600 %. After gravitational drainage, a significant fraction of the absorbed water remains retained within the fibre network, typically from 30 % to 80 %, preferably from 50 % to 70 %, and is gradually released to the underlying soil.

In an embodiment, this controlled water retention reduces soil evaporation, stabilizes moisture in the root zone and mitigates water stress during critical phases of plant establishment, particularly in sandy or degraded soils.

In an embodiment, the cellulosic matrix undergoes progressive biodegradation in the soil through enzymatic action by naturally occurring microorganisms. The degradation rate can be adjusted through the selection of grammage, thickness and mesh size. In an embodiment, the structure loses at least 50 % of its mass within a period ranging from 3 to 12 months, preferably from 6 to 9 months, while maintaining sufficient mechanical integrity during the crop establishment phase. Complete biodegradation typically occurs within a period ranging from 6 to 24 months, preferably from 12 to 18 months, resulting in full assimilation into the soil without formation of persistent residues or microplastics.

The combined effects of sustained biopesticide release, microalgal bioactivity, improved soil moisture and gradual organic matter input result in enhanced plant performance. The structure is capable of promoting increased root development, with observed increases in root length exceeding 10%, preferably exceeding 25%, compared with untreated controls. In addition, increases in aboveground biomass exceeding 5%, preferably exceeding 20%, have been observed.

In an embodiment, it was found that the combination of mesh aperture size from 0.5 mm to 10 mm, grammage from 200 g/m² to 900 g/m², and biopesticide loading from 1 g/m² to 8 g/m² consistently results in sustained release behaviour, reduced lixiviation and controlled biodegradation as described herein.

In an embodiment, the microalgae contribute to soil bioestimulation through multiple complementary mechanisms, including the release of organic compounds that enhance microbial activity, improved nutrient availability and stabilization of the rhizosphere environment. The improved moisture regime and reduced biotic stress further favour the establishment of beneficial soil-root interactions, including mycorrhizal associations.

The biodegradable geotextile structure described is suitable for use in agricultural, horticultural, forestry and environmental applications, including erosion control, post-fire restoration, soil bioengineering and environmental rehabilitation. The structure may be supplied in the form of mats, sheets or rolls and installed manually or mechanically, providing a multifunctional, environmentally compatible solution that integrates soil protection, water management, bioestimulation and plant protection within a single biodegradable material.

The technical effects of the geotextile mat of the present disclosure were evaluated by comparative laboratory and controlled field experiments. Unless otherwise stated, the initial nutrient loading was 12.0 ± 0.5 g/m² for all tested systems, and cumulative release is expressed as percent of the initially loaded nutrient mass. Data are provided as representative results suitable to demonstrate the functional mechanism and measurable technical effect.

**Table 1 - Nutrient Release Kinetics Parameters**

| Parameter | Unit | Geotextile mat of the present disclosure | Conventional Biodegradable Geotextile | Conventional Granular Fertilizer |
|---|---|---|---|---|
| Initial nutrient loading | g/m² | 12.0 ± 0.5 | 12.0 ± 0.5 | 12.0 ± 0.5 |
| Release at 24 h | % | 8 ± 2 | 22 ± 4 | 35 ± 6 |
| Release at 7 days | % | 32 ± 5 | 48 ± 7 | 62 ± 8 |
| Release at 30 days | % | 68 ± 6 | 74 ± 6 | 85 ± 5 |
| Release at 60 days | % | 92 ± 4 | 95 ± 3 | 98 ± 2 |
| t50 (50% released) | days | 18 ± 2 | 11 ± 2 | 6 ± 1 |
| Initial rate (0-3 days) | mg·m⁻²·day⁻¹ | 120 ± 15 | 260 ± 30 | 410 ± 45 |

As shown in Table 1, the geotextile mat of the present disclosure provides a substantially reduced initial burst compared with the conventional biodegradable geotextile and granular fertilizer, while still achieving high cumulative release over longer times. The delayed t50 and lower initial release rate indicate a progressive delivery profile compatible with the critical germination phase and reduced susceptibility to early leaching losses.

**Table 2 - Kinetic Model Fitting and Parameters**

| Kinetic model | Parameter | Geotextile mat of the present disclosure | Prior Art |
|---|---|---|---|
| Higuchi | kH (day^{-1/2}) | 0.18 | 0.32 |
| Korsmeyer-Peppas | n | 0.62 | 0.41 |
| Korsmeyer-Peppas | k | 0.21 | 0.38 |
| Correlation coefficient (R²) | - | 0.97 | 0.89 |

The fitting results in Table 2 show improved correlation for the geotextile mat of the present disclosure, with an R² of 0.97 under the reported conditions. The Korsmeyer-Peppas exponent n greater than 0.5 is consistent with anomalous transport, attributable to combined aqueous diffusion and progressive degradation of the geotextile matrix, a mechanism not present in conventional systems where nutrient release is largely independent of the structural evolution of the carrier.

**Table 3 - Correlation Between Biodegradation and Nutrient Release**

| Time | Geotextile mass loss (%) | Tensile strength retention (%) | Cumulative release (%) |
|---|---|---|---|
| 7 days | 4 ± 1 | 92 ± 3 | 32 ± 5 |
| 14 days | 9 ± 2 | 81 ± 4 | 48 ± 6 |
| 30 days | 18 ± 3 | 63 ± 5 | 68 ± 6 |
| 60 days | 35 ± 5 | 38 ± 6 | 92 ± 4 |

Table 3 demonstrates that cumulative nutrient release increases in parallel with geotextile mass loss and the controlled reduction of tensile strength. Under these representative conditions, the correlation between mass loss and cumulative release is high, with a Pearson correlation coefficient r of 0.94, supporting intentional coupling between biodegradation and functional release.

**Table 4 - Comparative Agronomic Efficiency (Controlled Field Trial)**

| Indicator | Unit | Geotextile mat of the present disclosure | Conventional Geotextile | No Mat |
|---|---|---|---|---|
| Germination rate | % | 91 ± 4 | 72 ± 6 | 54 ± 7 |
| Emergence homogeneity (CV) | % | 12 | 26 | 41 |
| Surface water retention | % | +45 | +18 | 0 |
| Leaching losses (total N) | % | -52 | -18 | - |
| Survival after 30 days | % | 88 ± 5 | 65 ± 8 | 47 ± 9 |

In the controlled field trial summarized in Table 4, the geotextile mat of the present disclosure produced higher germination and survival and a markedly reduced emergence coefficient of variation, indicating more homogeneous establishment. The observed increase in surface water retention and the reduction in nutrient leaching losses are consistent with the combined effects of local confinement, capillary moisture retention, and the biphasic controlled release profile.

Known biodegradable geotextiles are primarily used for erosion control and surface water retention and do not integrate a functional controlled nutrient release system, nor do they ensure local confinement of nutrients in the immediate vicinity of seeds. Conventional slow-release fertilizers are typically applied separately and remain susceptible to displacement and leaching, do not guarantee continuous contact with seeds, and do not provide mechanical protection of the germination zone.

By contrast, the geotextile mat of the present disclosure integrates geometric confinement of seeds and nutrients within mesh openings, capillary moisture retention, and a controlled biphasic release profile correlated with biodegradation. This integrated combination yields a measurable reduction in nutrient leaching and produces higher, more homogeneous, and more stable germination that is not predictable from a mere juxtaposition of known geotextiles and fertilizers.

To demonstrate soil-adaptive behavior, nutrient release was evaluated in agricultural soils of different textures under representative base conditions of 20-25 °C, pH 6.5-7.2, moisture at approximately 70% of field capacity, and simulated rainfall of 10 mm/day during the first 7 days followed by 5 mm/day up to 60 days, with the mat applied at the surface in intimate contact with soil.

**Table 5 - Nutrient Release Kinetics by Soil Type (Agricultural Conditions)**

| Soil texture | Release 24 h (%) | Release 7 days (%) | Release 30 days (%) | Release 60 days (%) | t50 (days) | Initial rate 0-3 d (mg·m⁻²·day⁻¹) |
|---|---|---|---|---|---|---|
| Sandy (low CEC) | 10 ± 2 | 36 ± 5 | 72 ± 6 | 94 ± 4 | 16 ± 2 | 140 ± 20 |
| Loamy (medium CEC) | 8 ± 2 | 32 ± 5 | 68 ± 6 | 92 ± 4 | 18 ± 2 | 120 ± 15 |
| Clay (high CEC) | 6 ± 2 | 28 ± 4 | 62 ± 6 | 89 ± 5 | 21 ± 3 | 95 ± 15 |

As summarized in Table 5, sandy soil shows a slightly higher initial release, consistent with higher hydraulic pull and lower ionic adsorption, while clay soil dampens early release and extends t50 due to higher cation exchange capacity and water retention. The loamy soil exhibits intermediate behavior.

**Table 6 - Nutrient Leaching Losses (Direct Comparison with Prior Art)**

| Soil | System | Leaching 0-14 d (%) | Leaching 0-60 d (%) |
|---|---|---|---|
| Sandy | Invention (mat) | 9 ± 2 | 18 ± 4 |
| Sandy | Conventional granular fertilizer | 22 ± 5 | 35 ± 7 |
| Loamy | Invention (mat) | 7 ± 2 | 15 ± 4 |
| Loamy | Conventional granular fertilizer | 18 ± 4 | 28 ± 6 |
| Clay | Invention (mat) | 5 ± 2 | 12 ± 3 |
| Clay | Conventional granular fertilizer | 12 ± 4 | 20 ± 5 |

Table 6 shows that, across soil textures, the geotextile mat of the present disclosure reduces nutrient recovery in eluate or drainage compared with conventional granular fertilization, particularly during the first 14 days when leaching susceptibility is highest.

**Table 7 - Degradation of the Geotextile versus Nutrient Release in Agricultural Soil**

| Time | Mass loss (%) | Tensile strength retention (%) | Cumulative release (%) |
|---|---|---|---|
| 7 days | 4 ± 1 | 92 ± 3 | 28-36 (soil-dependent) |
| 14 days | 9 ± 2 | 81 ± 4 | 42-55 |
| 30 days | 18 ± 3 | 63 ± 5 | 62-75 |
| 60 days | 35 ± 5 | 38 ± 6 | 89-94 |

In Table 7, cumulative release is reported as an interval because it varies with soil texture as reflected in Table 5, while the biphasic mechanism remains consistent in all cases, with an initial diffusion and capillarity contribution followed by a degradation-governed late phase.

**Table 8 - Agronomic Indicators by Soil Type (Controlled Field)**

| Soil | System | Germination (%) | Emergence CV (%) | Surface water retention vs control | Survival 30 d (%) |
|---|---|---|---|---|---|
| Sandy | Invention (mat) | 88 ± 5 | 14 | +40% | 84 ± 6 |
| Sandy | Conventional biodegradable geotextile | 70 ± 7 | 28 | +18% | 62 ± 8 |
| Sandy | No mat | 52 ± 8 | 43 | 0 | 45 ± 10 |
| Loamy | Invention (mat) | 91 ± 4 | 12 | +45% | 88 ± 5 |
| Loamy | Conventional biodegradable geotextile | 72 ± 6 | 26 | +18% | 65 ± 8 |
| Loamy | No mat | 54 ± 7 | 41 | 0 | 47 ± 9 |
| Clay | Invention (mat) | 86 ± 6 | 16 | +30% | 81 ± 7 |
| Clay | Conventional biodegradable geotextile | 68 ± 8 | 30 | +15% | 60 ± 9 |
| Clay | No mat | 50 ± 9 | 45 | 0 | 42 ± 10 |

Table 8 confirms that the geotextile mat of the present disclosure provides improved germination, improved emergence uniformity, and improved survival across soil textures, with the largest relative benefits typically observed in sandy soils where nutrient mobility and leaching propensity are elevated.

In one representative laboratory realization, nutrient release kinetics and leaching reduction are evaluated in leaching columns made of PVC having a height of 30 cm and an internal diameter of 10 cm, filled with dried and sieved agricultural soil (2 mm) prepared as sandy, loamy, and clay textures. The geotextile mat of the present disclosure is applied at the soil surface in intimate contact, with nutrient loading of 12.0 ± 0.5 g/m² and seed density of 10 ± 2 g/m². A first control uses a conventional biodegradable geotextile without nutrients with granular fertilizer applied at the surface at an equivalent dose, while a second control applies granular fertilizer without a mat. Simulated precipitation is applied at 10 mm/day for days 1-7 and 5 mm/day for days 8-60, at approximately 25 °C and pH 6.5-7.2. Eluate is collected in time fractions including 0-24 h, 1-3 days, 3-7 days, 7-14 days, 14-30 days, and 30-60 days, and nutrient concentrations are determined by analytical methods such as ion chromatography or UV-Vis for nitrate and ammonium, colorimetric analysis for phosphate, and ICP or FAAS for potassium. In parallel, geotextile mass loss, tensile retention, and microscopic evidence of surface degradation are determined to support coupling between degradation and release.

In a representative realization isolating the contribution of diffusion and degradation, mat samples of 10 cm by 10 cm are incubated in an aqueous medium at pH 6.8 with controlled conductivity at 20 °C and 30 °C, using both a static regime and a renewed medium regime with replacement every 24 hours to approximate sink conditions. Nutrients released are quantified at time points including 2 h, 6 h, 24 h, 3 days, 7 days, 14 days, and 30 days, while mass loss and tensile retention are measured at corresponding times. The resulting profiles maintain evidence of a late phase governed by degradation while allowing improved estimation of intrinsic early release rates under renewed conditions.

In a representative field realization, the geotextile mat of the present disclosure is evaluated on one-square-meter plots in sandy, loamy, and clay agricultural soils, with at least three replicates per condition. The geotextile mat of the present disclosure is installed over prepared soil with 12 g/m² nutrients and 8-12 g/m² seeds and is fixed using biodegradable staples. Controls include a conventional biodegradable geotextile combined with granular fertilizer and a condition without a mat. Surface moisture in the upper 0-3 cm is monitored during days 1-14 and subsequently weekly. Germination percentage, emergence coefficient of variation, and aboveground biomass at 30 days are measured, and drainage or leachate is collected where applicable using micro-lysimetry or collection boxes. Representative performance outcomes align with the agronomic indicators reported in Table 8 and leaching reduction reported in Table 6.

In a representative surface stabilization realization under intense rainfall, the geotextile mat of the present disclosure is applied on an experimental slope of approximately 15 to 25 degrees using a loamy-sandy soil, and rainfall is simulated at 30-50 mm/h for 30 minutes and repeated three times in one week. Sediment loss, displaced seed count, and germination after 14 days are determined, and reduced surface mobilization is observed in a manner consistent with the combined confinement and moisture retention mechanisms of the mat.

The experimental evidence demonstrates that the biodegradable geotextile mat of the present disclosure provides soil-adaptive, degradation-coupled, and spatially confined nutrient release, ensuring sustained nutrient availability during the germination and early growth stages while reducing nutrient losses by leaching. The combination of geometric confinement, capillary water retention, and biphasic release linked to biodegradation produces a measurable and reproducible technical effect that is not derivable in an obvious manner from conventional biodegradable geotextiles and conventional fertilization practices.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. Biodegradable geotextile structure for soil biostimulation, comprising:
a woven textile structure formed from hydrophilic filament yarns of a cellulose fiber, wherein the cellulose is selected from the list consisting of: alpha cellulose, beta cellulose, gamma cellulose and mixtures thereof;
at least one plant-based biopesticide selected from the list consisting of: nicotine, rotenone, pyrethrins I, pyrethrins II, eugenol, citronella oil, and mixtures thereof;
at least one microalgae selected from the list consisting of: chlorella spp., scenedesmus spp, dunaliella spp, spirulina spp., and mixtures thereof,
wherein the woven textile structure defines mesh apertures having a mesh opening of from 0.1 mm to 50 mm; wherein the at least one plant-based biopesticide and the at least one microalgae are physically entrapped and/or adsorbed within the mesh apertures and on the filament yarns of the woven textile structure,
and wherein the geotextile structure comprises:
a water absorption capacity from 200 % to 700 % by mass, relative to dry mass;
a sustained release of the plant-based biopesticide into soil over a period of 15 to 120 days, and progressive biodegradation resulting in a mass loss of at least 50% within 3 to 12 months under soil exposure conditions.

2. Biodegradable geotextile structure according to the previous claim, wherein the mesh has a mesh opening of from 0.5 mm to 10 mm.

3. Biodegradable geotextile structure according to any of the previous claims, wherein the grammage of the geotextile ranges from 50 to 1500 g/m², preferably 200 to 900 g/m².

4. Biodegradable geotextile structure according to any of the previous claims, wherein the thickness of the geotextile ranges from 0.1 µm to 10 mm, preferably from 0.5 mm to 5 mm.

5. Biodegradable geotextile structure according to any of the previous claims, wherein the at least one plant-based biopesticide is present in an amount ranging from 0.5 to 15 g/m², relative to the surface area of the geotextile; preferably from 1 g/m² to 8 g/m².

6. Biodegradable geotextile structure according to any of the previous claims, wherein the at least one plant-based biopesticide is a mixture of pyrethrin and eugenol and/or citronella.

7. Biodegradable geotextile structure according to any of the previous claims, wherein the amount of pyrethrins ranges from 0.1 g/m² to 3.0 g/m, and eugenol and/or citronella oil in individual amounts from 0.1 g/m² to 5.0 g/m².

8. Biodegradable geotextile structure according to any of the previous claims, wherein the amount of at least one microalgae ranges from 0.5 g/m² to 25 g/m², g/m², relative to the surface area of the geotextile; preferably 1 g/m² to 10 g/m².

9. Biodegradable geotextile structure according to any of the previous claims, wherein the mass ratio of microalgae to plant-based biopesticide ranges from 1:10 to 10:1, preferably from 1:5 to 5:1.

10. Biodegradable geotextile structure according to any of the previous claims, wherein the mass ratio of microalgae to plant-based biopesticide is selected such that the simultaneous release of bioactive compounds from the microalgae and the sustained release of the plant-based biopesticide results in enhanced soil biostimulation and pest suppression compared to a geotextile comprising only microalgae or only plant-based biopesticides.

11. Biodegradable geotextile structure according to any of the previous claims, wherein the residual moisture content of the geotextile structure dried structure may range from 5 % to 15 % (w/w), preferably from 8 % to 12 %(w/w).

12. Geotextile mat, sheet or roll comprising the biodegradable geotextile structure according to any of the previous claims.

13. A method for producing a biodegradable geotextile structure according to any of the previous claims comprising the steps of:
weaving a fabric structure of hydrophilic filament yarns of a cellulose fibers selected from the list consisting of alpha cellulose, beta cellulose, gamma cellulose, or mixtures thereof;
treating the woven fabric structure with a solution or suspension comprising at least a plant-based biopesticide and at least a microalgae;
drying the treated woven fabric structure to trap the at least a plant-based biopesticide and the at least a microalgae within the mesh apertures of the woven fabric structure.
